# EUROPÄISCHE PATENTSCHRIFT

(11) **EP 2 161 228 B1**
(45) Veröffentlichungstag und Bekanntmachung des Hinweises auf die Patenterteilung: **02.04.2014**
(21) Anmeldenummer: 09169268.1
(22) Anmeldetag: 02.09.2009
(51) Int. Cl.: B65G 47/91

(54) **Saugheber**
Vacuum pick-up device
Dispositif de levage aspirant

(30) Priorität: 05.09.2008 DE 102008045834
(43) Veröffentlichungstag der Anmeldung: 10.03.2010
(73) Patentinhaber: Bohle AG, 42781 Haan (DE)
(72) Erfinder: Ostendarp, Heinrich, 42781, Haan (DE); Weidenfeller, Kathrin, 65589 Hadamar (DE); Strehlow, Lutz, 42699, Solingen (DE)
(74) Vertreter: Lippert, Stachow & Partner

(56) Entgegenhaltungen:
- WO-A1-2007/123354
- DE-U1- 9 318 902
- US-A1- 2002 113 181

## Beschreibung

Die Erfindung betrifft einen Saugheber zur temporären Fixierung an einer im Wesentlichen glatten, luftundurchlässigen Befestigungsfläche mit einem auf die Befestigungsfläche aufzusetzenden Saugteller mit deformierbarer Saugscheibe, der ausgebildet ist, um zwischen der Saugscheibe und der Befestigungsfläche einen teilvakuumbeaufschlagten Hohlraum auszubilden, wobei die Saugscheibe zwischen dem Saugteller und der Befestigungsfläche angeordnet ist, wobei ferner der Saugteller einen umlaufenden, den Hohlraum umgebenden Tellerrand aufweist, an den sich bei Vakuumbeaufschlagung ein umlaufender Stützbereich einer dem Tellerrand zugewandten Saugscheibenoberseite abstützt, wobei an dem Tellerrand und/oder dem Saugscheibenrand Mittel vorgesehen sind, die bei Vakuumbeaufschlagung des Saughebers und Scherkraftausübung auf den Saugteller einer lateralen Verschiebung des Saugtellerrandes gegenüber dem Saugscheibenrand entgegenwirken, wobei die Mittel in Form von sich in Scherkraftrichtung hintergreifenden und bei Scherkraftausübung in radialer Richtung gegeneinander abstützenden Vorsprüngen von Tellerrand und Saugscheibenrand ausgebildet sind, und wobei der Abstützvorsprung des Tellerrandes radial einwärts zu dem Abstützvorsprung der Saugscheibe angeordnet ist.

Derartige Saugheber werden insbesondere in Anwendungsfällen eingesetzt, bei welchen auf den an der Befestigungsfläche fixierten Saugheber Scherkräfte ausgeübt werden, die im Wesentlichen oder zumindest mit einer Kraftkomponente parallel zu der Befestigungsfläche wirken. Dies ist insbesondere der Fall, wenn der Saugheber an schrägen oder vertikalen Befestigungsflächen montiert wird und in einer Richtung zumindest im Wesentlichen parallel zu der Befestigungsfläche kraftbeaufschlagt wird, beispielsweise wenn Gegenstände mit vertikalen Befestigungsflächen mittels des Saughebers anzuheben sind oder wenn der Saugheber an einem Wandbereich befestigt ist und als Haltevorrichtung eingesetzt wird, beispielsweise als temporärer Haltegriff für Personen. Weiterhin werden gattungsgemäße Saugheber auch oftmals Torsionskräften um die Saugheberlängsachse ausgesetzt.

Allgemein besteht das Problem, dass der Saugheber bei gegebener Größe der Saugscheibe insbesondere bei Ausübung von Scherkräften eine möglichst hohe Haltekraft über eine möglichst lange Haltedauer aufweisen soll. Generell kann die Haltekraft eines Saughebers zwar durch eine Vergrößerung von Saugteller und Saugscheibe erhöht werden, dem sind jedoch in der Praxis oftmals Grenzen gesetzt, beispielsweise aufgrund von räumlichen Verhältnissen und daraus resultierenden Einschränkungen an der Befestigungsfläche, Unterbrechungen der Befestigungsfläche oder wenn die Befestigungsfläche mit den im wesentlichen glatten und luftundurchlässigen Flächenbereichen eine Strukturierung aufweist, wie dies beispielsweise bei verfliesten Wandbereichen mit zwischen den Fliesen angeordneten Fugen der Fall ist. Es hat sich im Allgemeinen herausgestellt, dass eine höhere Kraftbeanspruchung mit zunehmender Härte der Saugscheibe erreicht werden kann, da die Saugscheibe bei Scherbeanspruchung einen höheren Widerstand hat, welcher einer frühzeitigen Deformation entgegensteht, die letztlich zu einem Verlust des Teilvakuums des Hohlraumes führen würde. Andererseits ist die Härte der Saugscheibe auch an andere Erfordernisse anzupassen. So weist die Befestigungsfläche, an welcher der Saugheber festzulegen ist, oftmals eine gewisse Rauheit oder Oberflächenunregelmäßigkeit auf, beispielsweise auch im Falle von Fliesen, so dass eine zu hohe Härte der Saugscheibe eine unzureichende Anpassung an die Befestigungsoberfläche bedingen würde, so dass die auf den Saugheber ausübbaren Scherkräfte ebenfalls begrenzt wären, da Undichtigkeiten zwischen Saugheber und Befestigungsfläche einen Vakuumverlust bewirken.

Die US 2002/0113181 beschreibt einen gattungsgemäßen Saugheber mit Saugteller und deformierbarer Saugscheibe und einem manuellen Betätigungsmechanismus zur bereichsweisen Anhebung der Saugscheibe von der Befestigungsfläche zwecks Ausbildung eines Teilvakuums. Der Saugscheibenrand ist mit einem umlaufenden Vorsprung versehen, welcher in eine Nut des Saugtellerrandes eingreift. Der radial innenliegende umlaufende Nutrand weist eine größere Breite auf als der radial außenliegende umlaufende Nutrand.

Der Erfindung liegt somit die Aufgabe zugrunde, einen Saugheber bereitzustellen, welcher bei gegebener Saugscheibengröße unter Scherkrafteinwirkung höhere Haltekräfte aufnehmen und/oder eine gegebene hohe Haltekraft über einen längeren Zeitraum aufnehmen kann.

Diese Aufgabe wird erfindungsgemäß durch einen Saugheber nach Anspruch 1 gelöst.

Erfindungsgemäß ist der radial auswärts des Tellerrandvorsprunges angeordnete Saugscheibenbereich als "Kompressionsbereich" ausgebildet, der somit der radiale Bereich des Tellerrandes ist, der bei zumindest im Wesentlichen maximaler Vakuumbeaufschlagung die höchste Anpresskraft auf die Saugscheibe in Richtung auf die Befestigungsfläche ausübt. DieserTellerrandbereich kann vollumfänglich um den Saugheber umlaufen. DieserTellerrandbereich kann radial auswärts der Seitenfläche des Tellerrandvorsprunges sein, die seitlich, eine laterale Verschiebung von Saugscheibe und Saugteller erschwerend, an den Saugscheibenvorsprung anlegbar ist. Auch bei Scherkrafteinwirkung kann somit eine lange Haltedauer des Saughebers erzielt werden.

Es wurde festgestellt, dass durch die einer lateralen Verschiebung von Tellerrand und Saugscheibenrand entgegenwirkenden Mittel der Saugheber auch bei gleicher Saugscheiben- und/oder Tellerrandgröße und gleichem Saugscheibenmaterial wesentlich höheren Scherkräften über eine längere Zeitdauer standhalten kann. Demgegenüber können sich bei herkömmlichen Saughebern die Saugscheiben bei hoher Scherbelastung so stark deformieren, dass sich der Saugscheibenrand einrollt und nur noch mit seinem Außenkantenbereich an der Befestigungsfläche anliegt und den Hohlraum abschließt. Die eine Verschiebung von Tellerrand und Saugscheibenrand erschwerenden Mittel können allgemein derart ausgebildet sein, dass Tellerrand und Saugscheibenrand miteinander verkrallen und auch bei Vakuumbeaufschlagung und hoher Scherkraftausübung aneinander fixiert sind. Hierzu kann beispielsweise der Tellerrand mit krallenförmigen Vorsprüngen versehen sein, die sich bei Vakuumbeaufschlagung und/oder Scherbeanspruchung in Scherrichtung unter Formschlussbildung in das Gummimaterial der Saugscheibe eingraben können, wozu an der Saugscheibenoberseite entsprechende Vertiefungen vorgesehen sein können. Alternativ können auch der Tellerrand und der Saugscheibenrand der nicht vakuumbeaufschlagten Saugscheibe jeweils mit einem Innen- bzw. Außenkonus oder einem sich über zumindest einen Teilumfang des Saughebers erstreckenden Absatz versehen sein, so dass der Tellerrand den Konus des Saugscheibenrandes radial außenseitig glockenartig umgreift, wobei Saugscheiben- und Tellerrand beim Anpressen des Saughebers an die Anlagefläche flächig aneinander anliegen können. Die Anpresskraft des Tellerrandes an den Saugscheibenrand kann hierbei in radialer Richtung im Wesentlichen gleich bleiben. Vorzugsweise sind die einer lateralen Verschiebung entgegenwirkenden Mittel in Bezug auf den in Scherkraftrichtung vorne liegenden Bereich des Saughebers wirksam. Vorzugsweise sind die einer lateralen Verschiebung entgegenwirkenden Mittel in Art einer auf den Saugteller einwirkenden Auflaufbremse ausgebildet, so dass die der Verschiebung entgegenwirkenden Bremsmittel der Saugscheibe radial auf Höhe oder außenliegend zu den mit diesen wechselwirkenden Bremsmitteln der Saugscheibe angeordnet sind, insbesondere bezüglich des in Scherrichtung vorne liegenden Saugtellerbereichs.

Allgemein können die einer laterale Verschiebung entgegenwirkenden Mittel der Saugscheibe derart angeordnet und ausgebildet sein, dass diese unter Scherkrafteinwirkung von den korrespondierenden, einer Verschiebung entgegenwirkenden Mitteln des Saugtellers komprimiert oder druckbeaufschlagt werden, wobei die Druckkraft vorzugsweise über die genannten Saugscheibenmittel in die Saugscheibe abgeleitet werden und von dieser vorzugsweise lastabtragend unter Druckbeanspruchung aufgenommen werden. Die Druckkraftübertragung erfolgt vorzugsweise derart, dass durch diese in einem Teilbereich der Saugscheibe die Anpresskraft der Saugscheibe gegenüber der Befestigungsfläche erhöht wird, insbesondere in einem Teilbereich, der in Scherkraftrichtung dem Ankoppelungsbereich der genannten Mittel von Saugscheibe und Tellerrand aneinander vorgelagert und/oder radial weiter außen angeordnet ist. Dieser Teilbereich ist vorzugsweise ein Bereich, der auch ohne Scherbelastung den Hohlraum zwischen Saugscheibe und Befestigungsfläche abdichtet. Die einer lateralen Verschiebung entgegenwirkenden Mittel können insgesamt in Art einer "Auflaufbremse" wirken, vorzugsweise an der in Scherkraftrichtung vorderen Seite des Saughebers. Allgemein kann die Ankoppelungsstelle der einer lateralen Verschiebung entgegenwirkenden Mittel an dem Saugteller weiter radial auswärts liegen als die Ankoppelungsstelle der Mittel des Saugtellers, die unter Zusammenwirkung mit den erstgenannten Mitteln der Saugscheibe der lateralen Verschiebung entgegenwirken. Die in Scherkraftrichtung des Saughebers vorne liegende Ankoppelungsstelle kann somit ebenfalls durch eine Scherkrafteinwirkung unter Druck belastet werden.

Erfindungsgemäß sind die eine laterale Verschiebung erschwerenden Mittel in Form von sich in Scherkraftrichtung hintergreifenden und bei Scherkraftausübung in radialer Richtung gegeneinander abstützenden Vorsprüngen von Tellerrand und Saugscheibenrand ausgebildet (im folgenden auch "Tellerrandvorsprung" und "Saugscheibenvorsprung" genannt), wobei der Tellerrand- und/oder der Saugscheibenrandvorsprung jeweils um den Saugteller und/oder die Saugscheibe vollumfänglich umlaufen können. Der Abstützvorsprung des Tellerrandes ist hierbei radial einwärts zu dem Abstützvorsprung der Saugscheibe angeordnet. Ohne oder zumindest bei Scherkraftausübung können die beiden Vorsprünge bei vakuumbeaufschlagtem Saugheber über zumindest einen Teil oder praktisch die gesamte Umfangserstreckung des Saugtellers linienförmig oder flächig aneinander anliegen. Der Anlagebereich kann sich in gewissem Ausmaß in radialer und/oder vertikaler Richtung erstrecken, beispielsweise über ≥ 1-2 mm oder ≥ 3 - 4 mm.

Allgemein sei im Sinne der Erfindung der Begriff "radial innen liegender Tellerrandbereich" als der Tellerrandbereich verstanden, der radial innen liegend zu dem dem Saugscheibenvorsprung zugewandten Abstützbereich des Tellerrandvorsprunges angeordnet ist, der einer lateralen Verschiebung entgegenwirkend mit diesem zusammenwirkt. Als "radial außen liegender Tellerrandbereich" sei der Tellerrandbereich verstanden, der radial außen liegend zu dem dem Saugscheibenvorsprung zugewandten Abstützbereich des Tellerrandvorsprunges angeordnet ist.

Durch die erfindungsgemäße Ausbildung von Tellerrand und Saugscheibe wird somit ein übermäßiges Deformieren und/oder Einrollen der Saugscheibe bei Scherkraftausübung wesentlich erschwert. Hierdurch kann auch bei höheren Scherkräften noch eine definierte und möglichst großflächige Anpressfläche zwischen Saugscheibe und Befestigungsfläche, wodurch auch höhere Scherkräfte aufgenommen werden können. Betrachtet man ein Zugkraftexperiment, bei welchem der Saugheber zunehmenden Scherkräften ausgeübt wird, die insbesondere mit der Zeit gleichmäßig ansteigen können, so kann bei der erfindungsgemäßen Ausbildung des Saughebers gegenüber einem Saugheber ohne erfindungsgemäße Mittel eine höhere maximale Haltekraft und insbesondere längere Haltedauer auch bei hohen Scherkräften, z.B. oberhalb 800-1.000 N, sowie ein geringerer Kraftabfall von der maximalen Haltekraft bis zum Abriss über das Kraft-Weg-Diagramm festgestellt werden. Gegebenenfalls kann die Erhöhung von Haltekraft und/oder Haltedauer auch bei Torsionsbeanspruchung des erfindungsgemäßen Saughebers um seine Längsachse (d.h. parallel zur Anpressrichtung des Saughebers durch das Teilvakuum an die Befestigungsfläche) erfolgen. Vorzugsweise erfolgt durch die einer lateralen Verschiebung entgegenwirkenden Mittel von Saugscheibe und Tellerrand zugleich auch eine Zentrierung des Saugtellers gegenüber der Saugscheibe. Dies kann für einen Zustand ohne Scherbelastung gelten. Dies kann unabhängig hiervon für einen Zustand des Saughebers mit oder ohne Vakuumbeaufschlagung gelten.

Vorzugsweise ist die Saugscheibe derart ausgebildet, dass der Tellerrandvorsprung von der

Befestigungsfläche einen minimalen Abstand d1 und die Saugscheibe im Bereich ihres radialen Außenrandes eine Materialstärke d2 aufweist, die größer als der Abstand d1 ist. Hierdurch wird bei Scherkrafteinwirkung ein "Durchrutschen" des äußeren Saugscheibenrandes unter den Tellerrand wesentlich erschwert und der Sauscheibenrand zwischen Tellerrand und Anlagefläche zusätzlich verklemmt, wodurch die Haltedauer erhöht bzw. höhere Scherkräfte aufgenommen werden können. Die Materialstärke d2 kann ≥ 5-10%, ≥ 20-30% oder ≥ 40-50% größer als der Abstand d1 sein.

Besonders bevorzugt weist der Tellerrandbereich des Saugtellers eine sich zumindest über einen Teilumfang desselben erstreckende Nut auf und die Saugscheibe ist mit einem in die Nut eingreifenden Vorsprung versehen, der sich zumindest bei teilvakuumbeaufschlagter oder bereits bei nicht-teilvakuumbeaufschlagter Saugscheibe zumindest bei Scherkraftausübung parallel auf den Saugteller an einer Nutflanke der Tellerrandnut seitlich abstützt. Hierdurch sind besonders effektive Mittel zur Verschiebungsverhinderung vorgesehen, so dass der Saugheber auch bei gleicher Saugscheiben- und/oder Tellerrandgröße und gleichem Saugscheibenmaterial wesentlich höheren Scherkräften über eine längere Zeitdauer standhalten kann, insbesondere auch Scherkräften oberhalb 800-1.000 N. Es versteht sich, dass sich unter Umständen der Vorsprung bei sehr hohen Scherkräften über Teilbereiche wieder aus der Nut entfernen kann, auf jeden Fall sind Teilbereiche des Vorsprungs jedoch auch bei diesen Bedingungen innerhalb der Nut angeordnet und verkrallen die Saugscheibe an dem Tellerrand besonders effektiv. Vorzugsweise ist der Saugscheibenvorsprung ohne Scherkraftausübung lose in der Nut gehaltert, also nicht z.B. mit dem Tellerrand verklebt. Gegebenenfalls kann der Vorsprung z.B. durch Verpressen kraftschlüssig in der Nut gehaltert sein, auch wenn dies nicht immer bevorzugt ist.

Insbesondere kann der Saugscheibenvorsprung bereits bei nicht-teilvakuumbeaufschlagter Saugscheibe in die Nut eingreifen. Die Saugscheibe kann sich über die innere Nutflanke der Tellerrandnut hinaus in Richtung auf die Saugheberlängsachse erstrecken und liegt vorzugsweise zumindest bei Teilvakuumbeaufschlagung an dem die Tellerrandnut radial innen begrenzenden Tellerrandbereich an. Die Saugscheibe kann sich in der Saugtellerhauptebene durchgehend über den gesamten Hohlraum zwischen Saugscheibe und Befestigungsfläche erstrecken.

Der in die Tellerrandnut eingreifende Saugscheibenvorsprung ist vorzugsweise stegförmig ausgebildet. Der Saugscheibenvorsprung kann hinterschneidungsfrei in die Tellerrandnut eingreifen. Vorzugsweise erstreckt sich die Tellerrandnut vollumfänglich um den Saugteller, Vorzugsweise erstreckt sich der Saugscheibenvorsprung vollumfänglich um die Saugscheibe.

Die Nut kann insbesondere einen zumindest im Wesentlichen rechteckigen, dreieckigen oder trapezförmigen Querschnitt aufweisen, ohne hierauf beschränkt zu sein, wobei eine Nutflanke senkrecht zur Saugtellerhauptebene verlaufen kann (bei rechteckiger Ausbildung beide). Der Nutquerschnitt kann zu einer durch die Nutgrundmitte laufenden Nutmittelebene symmetrisch oder asymmetrisch sein. Ist zumindest eine der Nutflanken schräg, d.h. nicht senkrecht, zur Saugtellerhauptebene angestellt, so ist vorzugsweise die radial innere Nutflanke steiler zur Saugtellerhauptebene angestellt als die radial äußere Nutflanke. Der von den Nutflanken eingeschlossene Winkel kann ≥300°-40° oder ≥ 50°-60° sein, der eingeschlossene Winkel kann ≤ 70°-80° oder ≤ 60° sein. Ist die Nut nicht eine Rechtecknut, so erweitert sich diese vorzugsweise zur Saugscheibenoberfläche hin.

Vorzugsweise wird der Saugscheibenvorsprung bei zumindest annähernd maximal teilvakuumbeaufschlagter und/oder bei nicht-teilvakuumbeaufschlagter Saugscheibe zumindest über einen Teil oder vorzugsweise seine gesamte radiale Breite von dem Anlagebereich der Saugscheibe an der Befestigungsfläche unterstützt. Dies kann für den nicht durch externe Kräfte belasteten Saugheber gelten (Kräfte z.B. als von außen wirkende Scherkräfte und/oder axiale Kräfte, ausgenommen der Anpresskraft durch das Teilvakuum an die Befestigungsfläche), dies kann vorzugsweise auch für den unter Scherung belasteten Saugheber gelten, wobei die Scherkraft 50-75% der maximalen Haltekraft bei Scherbelastung betragen kann. Die Unterstützung des Saugscheibenvorsprungs für die oben genannten Bedingungen kann jeweils unabhängig voneinander ≥ 25-40% oder ≥ 50-75% der radialen Breite des Saugscheibenvorsprungs an dessen Basis an der Saugscheibenoberseite betragen. Vorzugsweise wird somit ohne Scherbelastung des Saughebers zumindest die radial außenliegende Seite des Saugscheibenvorsprungs bei zumindest annähernd maximal teilvakuumbeaufschlagter und/oder bei nicht-teilvakuumbeaufschlagter Saugscheibe von dem Anlagebereich der Saugscheibe an der Befestigungsfläche unterstützt.

Ferner können allgemein Saugscheibe und Tellerrand derart ausgebildet sein, dass bei Nicht-Vakuumbeaufschlagung des an der Befestigungsfläche anliegenden Saughebers die Saugscheibe von dem radial innen liegenden Tellerrandbereich zumindest über einen Teilbereich oder dessen gesamte Radialerstreckung durch einen Spalt getrennt ist oder zumindest im Wesentlichen lose an diesem anliegt, wenn der Saugheber nicht scherkraftbeaufschlagt ist. Dieser Spalt kann zum Hohlrauminneren hin übergehen. Dieser Tellerrandbereich kann radial innenliegend zu oder auf Höhe der radial inneren Tellerrandnutflanke oder der radial nach außen gerichteten Seitenfläche des Tellerrandabstützvorsprunges, der seitlich an dem Saugscheibenabstützvorsprung anliegen kann, angeordnet sein. Der Spalt kann sich bis zu der Tellerrandnutflanke oder der Seitenfläche des Tellerrandvorsprunges erstrecken. Bei zumindest im Wesentlichen maximaler Vakuumbeaufschlagung durch den Betätigungsmechanismus und ohne Scherkraftbeaufschlagung kann die Saugscheibenoberseite von dem radial innenliegenden Tellerrandbereich noch geringfügig beabstandet sein oder im Wesentlichen lose an diesem anliegen, wobei vorzugsweise der radial innenliegende Tellerrandbereich praktisch noch keine Anpresskraft gegenüber der Saugscheibenoberfläche erfährt. Bei Scherkraftausübung liegt vorzugsweise der radial innenliegende Tellerrandbereich im Wesentlichen lose an der Saugscheibenoberfläche an oder kann von dieser noch geringfügig beabstandet sein, gegebenenfalls kann auch eine Anlage dieser Bereich mit einer signifikanten Anpresskraft gegeben sein, was sich jeweils auf die in Scherkraftrichtung vorne liegenden Bereiche von Tellerrand und Saugscheibe bezieht. Der radial innenliegende Tellerrandbereich ist weist hier jeweils auf die Saugscheibenoberfläche bzw. Befestigungsfläche hin.

Besonders vorteilhaft ist es, wenn der Tellerrand und die Saugscheibe, insbesondere der dem Tellerrand gegenüberliegende Saugscheibenbereich, derart ausgebildet sind, dass bei Teilvakuumbeaufschlagung der Saugscheibe, insbesondere bei zumindest annähernd maximaler Vakuumbeaufschlagung derselben, die Saugscheibe zumindest über einen Teil der radialen Ersteckung des radial innen liegenden Tellerrandbereichs zumindest geringfügig von der Befestigungsfläche absteht. Dies gilt vorzugsweise für den nicht durch externe Kräfte wie beispielsweise Scherkräfte belasteten Saugheber. Hierdurch entsteht zwischen Befestigungsfläche und Saugscheibe ein Spalt, der vorzugsweise zum Hohlraum zwischen Befestigungsfläche und Saugscheibe hin geöffnet ist. Der Spalt kann in etwa auf Höhe der seitlichen Abstützflanke des Tellerrandvorsprunges bzw. der radial innen liegenden Nutflanke oder jeweils radial innenliegenden zu dieser enden. Vorzugsweise wird die Anpresskraft der Saugscheibe an die Befestigungsfläche somit auf einen Bereich beschränkt, der radial außenliegend zu der radial innenliegenden Tellerrandnutflanke oder einer sich in Umfangsrichtung des Saugtellers erstreckenden Nase des Tellerrandes ist, die radial innenliegend der Tellerrandnut angeordnet ist. Das oben Gesagte gilt jeweils vorzugsweise für den Fall, dass der Saugheber keinen Scherkräften ausgesetzt ist. Allgemein kann sich die Saugscheibe somit (nur) über einen Teil deren radialer Breite von der Befestigungsfläche abheben, über den sich die Saugscheibe an deren Oberseite an dem Tellerrand abstützt, lose an diesem anliegt oder durch einen geringen Spalt von diesem beabstandet ist. Die Saugscheibenunterseite kann sich allgemein über ≥ 5-10% oder ≥ 15-20%, vorzugsweise ≤ 60-70% oder ≤ 40-50% über die Tellerrandbreite von der Befestigungsfläche abheben. Die radiale Breite des Tellerrandes auf Saugscheibenhöhe kann somit größer als die Breite der Saugscheibenanlagefläche an der Befestigungsfläche sein. Die vollumfängliche Anlagefläche der Saugscheibe an der Befestigungsfläche wird hierdurch reduziert, so dass die Anpresskraft des Saugscheibenanlagebereichs an die Befestigungsfläche erhöht wird. Insgesamt kann hierdurch die Haltedauer des Saughebers an der Befestigungsfläche bei Scherkräften erhöht werden.

Der Spalt auf Höhe der radial innenliegenden Tellerrandnutflanke zwischen Saugscheibe und Befestigungsfläche bei an dem radial innenliegenden Tellerrandbereich anliegender Saugscheibe kann eine Höhe (d.h. einen vertikalen Abstand von Saugscheibe und Befestigungsfläche), von ≥ 0,2 - 0,3 mm, vorzugsweise ≥ 0,4 - 0,5 mm, beispielsweise ≥ 0,6 - 0, 7 mm aufweisen. Der Spalt kann ≥ 2,5 - 3 mm, vorzugsweise ≤ 2 - 2,25 mm, beispielsweise ≤ 1,5 - 1,75 mm sein. Ein Anheben des dem Tellerrandbereich gegenüberliegenden Bereiches der Saugscheibe von der Befestigungsfläche bei Vakuumbeaufschlagung des Saughebers kann dadurch erleichtert oder ermöglicht werden, dass bei nicht-teilvakuumbeaufschlagtem Saugheber der radial innenliegende Tellerrandbereich vertikal von der Saugscheibenoberseite beabstandet ist. Für die Höhe dieses Spaltes kann das zu obiger Spalthöhe Gesagte gelten, bis eventuell auf eine gewisse Kompression oder Deformation der Saugscheibe bei deren Anpressen an dem Tellerrand. Durch den Spalt auf Höhe der radial innen liegender Nutflanke zwischen Tellerrand und Saugscheibe wird ermöglicht, dass die Anpressfläche der Saugscheibe an die Befestigungsfläche auf einen Bereich beschränkt wird, der radial außen liegend zu der radial inneneren Nutflanke der Tellerrandnut angeordnet ist. Die Anpresskraft des Saughebers an die Befestigungsfläche bei gegebener Vakuumbeaufschlagung wird hierdurch erhöht.

Vorzugsweise ist der Abstützvorsprung des Tellerrandes derart ausgebildet, dass er eine Hinterschneidung des Abstützvorsprungs der Saugscheibe hintergreift. Die Abstützvorsprünge von Tellerrand und Saugscheibenrand hintergreifen und verkrallen sich somit miteinander, was vorzugsweise bereits für den scherunbelasteten Saugheber gilt, so dass ein Einrollen des Saugscheibenrandes bei Scherbeanspruchung weiter erschwert wird. Die Hinterschneidungen sind an den radial nach innen bzw. außen weisenden Seitenflächen der jeweiligen Abstützvorsprünge angeordnet. Vorzugsweise weisen somit die Seitenfläche der Abstützvorsprünge von Tellerrand und/oder Saugscheibenrand an der jeweils dem anderen Vorsprung zugewandten Seitenfläche eine Hinterschneidung auf, gegebenenfalls auch nur der Abstützvorsprung des Tellerrandes und/oder des Saugscheibenrandes.

Der Saugscheibenvorsprung und/oder der Abstützvorsprung des Tellerrandes können sich zumindest über einen Teilumfang der Saugscheibe erstrecken, beispielsweise um ≥ 20-30°, ≥ 40-60° oder auch ≥ 90-120° um den Saugscheibenumfang.

Der Saugscheibenvorsprung ist vorzugsweise derart angeordnet, dass die Verbindungslinie des mittleren Bereiches des Vorsprunges mit der Saugheberlängsachse bzw. der Mittelachse der Saugscheibe zumindest im Wesentlichen parallel zu der Scherkraftrichtung angeordnet ist. Der Vorsprung ist hierbei vorzugsweise in Scherkraftrichtung auf der der Saugheberlängsachse zugewandten Seite angeordnet. Vorzugsweise sind an der Saugscheibe in radialer Richtung zwei einander gegenüberliegende Vorsprünge angeordnet, so dass der Saugheber in beiden Richtungen unter Abstützung und/oder Verpressung des Saugscheibenvorsprunges in der Tellerrandnut erhöhte Scherkräfte aufnehmen kann. Vorzugsweise erstreckt sich der Saugscheibenvorsprung vollumfänglich und durchgehend um die Saugscheibe, wobei der Vorsprung zumindest im Wesentlichen stegförmig ausgebildet sein kann. Die Tellerrandnut kann so ausgebildet sein, dass der Vorsprung im nicht-teilvakuumbeaufschlagtem und/oder teilvakuumbeaufschlagtem Zustand der Saugscheibe eine Aufnahme des Vorsprungs gewährleistet. Gegebenenfalls können auch mehrere über den Saugscheibenumfang verteilt angeordnete, vorzugsweise stegförmige, Vorsprünge vorgesehen sein, welche in eine Tellerrandnut eingreifen, vorzugsweise ist der umlaufende Saugscheibenvorsprung durchgehend ausgebildet.

Der Tellerrand kann derart ausgebildet sein, dass dieser bei zumindest im Wesentlichen maximaler Vakuumbeaufschlagung des Saughebers derart an der Saugscheibe anliegt, dass sich in radialer Richtung des Tellerrandes, d.h. bezogen auf einen Tellerrandquerschnitt, Zonen unterschiedlicher Anpresskraft an die Saugscheibe ergeben, auch wenn keine Scherkräfte auf den Saugteller ausgeübt werden. Insbesondere können die Anpresskräfte in radialer Richtung von innen nach außen zu nehmen. Der Bereich maximaler Anpresskraft kann an dem radial äußeren Tellerrandbereich angeordnet sein, vorzugsweise im mittleren Bereich oder radial außerhalb der Mittellinie desselben. Der Tellerrand kann hierbei von einem radial außen liegenden Bereich nach radial innen hin ansteigen, so dass sich dessen Abstand zu einer an dem Saugheber anliegenden ebenen Befestigungsfläche radial einwärts gerichtet hin vergrößert. Der radial innenliegende und radial außenliegende Tellerrandbereich können einen Höhenversatz zueinander aufweisen, beispielsweise von ≥ 0,2 - 0,5 mm, ≥ 1 - 1,5 mm oder auch ≥ 2 - 3 mm. Der Höhenversatz kann ≤ 5-7 mm oder ≤ 4 mm betragen. Der Tellerrand und/oder der Stützbereich der Saugscheibe können somit derart strukturiert sein, dass diese bei lose an der Saugscheibe anliegendem Tellerrand eine gemeinsame Anlagefläche und einen der Anlagefläche benachbarten Freiraum ausbilden, wobei bei Vakuumbeaufschlagung des Saugtellerhohlraumes unter Verringerung des Freiraumes die Gesamtanlagefläche des Tellerrandes an der Saugscheibe vergrößert wird.

Der äußere Tellerrandbereich kann Zonen mit unterschiedlichem Anstellwinkel zur Saugscheibenhauptebene aufweisen. Ein radial außen liegender Bereich desselben kann hierbei einen geringeren Anstellwinkel zu der Saugscheibenhauptebene aufweisen, als ein weiter radial innen liegender Randbereich. So kann der Tellerrand zunächst einen Anstellwinkel von ≥ 0,2-0,35° oder ≥ 0,5 - 0,75° aufweisen, der Anstellwinkels kann ≤ 6°, ≤ 4 - 5° oder ≤ 2 - 3° betragen, beispielsweise ca. 1°. Weiter radial einwärts kann ein bei zumindest im Wesentlichen maximaler Vakuumbeaufschlagung an die Saugscheibe anlegbarer Bereich des Tellerrandes vorgesehen sein, welcher einen Anstellwinkel von ≥ 1°, ≥ 2 - 3° oder ≥ 5 - 8° aufweist, der Anstellwinkel kann ≤ 20 - 25°, vorzugsweise ≤ 15-17° oder ≤ 12° betragen. Die beiden Bereiche mit unterschiedlichem Anstellwinkel können unmittelbar aneinander angrenzen oder durch einen Stufenabsatz voneinander getrennt sein. Der Bereich mit kleinerem Anstellwinkel zu der Befestigungsfläche kann sich bis zur radialen Außenkante des Tellerrandes erstrecken, er kann auch in einen im Wesentlichen ebenen Bereich übergehen, dessen radiale Erstreckung geringer sein kann als die radiale Erstreckung des geneigten Tellerrandbereiches. Der Tellerrand kann an seiner radialen Außenkante auch angefast sein.

Wird der Saugtellerdurchmesser derart vergrößert, dass der Tellerrand im Wesentlichen den gleichen Außendurchmesser aufweist, wie die Saugscheibe, so kann die Anpresskraft des Saughebers an der Befestigungsfläche weiter erhöht werden. Dies wird dadurch ermöglicht, dass erfindungsgemäß durch die einer Relatiwerschiebung von Saugteller und Saugscheibe entgegenwirkenden Mittel wie z.B. eines in die Tellerrandnut eingreifenden Saugscheibenvorsprung ein Einrollen des Saugscheibenrandes bei Scherkräften wesentlich erschwert wird, so dass das Einrollen der Saugscheibe nicht durch einen radialen Überstand über den Tellerrand aufgefangen werden muss. Vorzugsweise beträgt der radiale Überstand von Tellerrand und Saugscheibenaußenrand gegeneinander ≤ 2,5 bis 3 mm oder ≤ 2 - 2,5 mm, besonders bevorzugt ≤ 1,5 - 1 mm oder ≤ 0,5 mm bis praktisch 0 mm. Hierbei kann der Saugscheibenrand gegenüber dem Tellerrand nach außen vorstehen oder auch umgekehrt.

Für verschiedene Anwendungsfälle hat es sich weiterhin als vorteilhaft erwiesen, wenn die radial innen liegende Nutflanke derTellerrandnut im Vergleich zu der radial außen liegenden Nutflanke unterschiedlich weit in Richtung zur Saugscheibe hin vorsteht. Für bestimmte Anwendungsfälle kann es vorteilhaft sein, wenn die radial innen liegende Nutflanke weiter in Richtung auf die Saugscheibe hin vorsteht als die radial außen liegende Nutflanke. Für andere Anwendungsfälle kann es vorteilhaft sein, wenn die radial außen liegende Nutflanke im Vergleich zu der radial innen liegenden Nutflanke weiter in Richtung zur Saugscheibe hin vorsteht. Hierdurch können jeweils die Anpresskräfte des Tellerrandes an die Saugscheibe und damit auch die radiale Kraftverteilung des Anpressbereichs der Saugscheibe an die Befestigungsfläche bei zumindest annähernd maximaler Vakuumbeaufschlagung sowie auch die seitliche Abstützung des Saugscheibenvorsprungs in der Tellerrandnut an die jeweiligen Bedingungen wie beispielsweise Tellergröße, Saugscheibenmaterial, ausgeübte statische und/oder dynamische Scherbelastungen und dergleichen angepasst werden. Der Unterschied der vertikalen Abstände der Nutflanken (bzw. deren Unterkanten) zu der Befestigungsfläche kann ≥ 5-10% oder ≥ 20-30% bezogen auf den kleineren Nutflankenabstand sein.

Vorzugsweise ist der an die radial innen liegende Nutflanke angrenzende Bereich des Tellerrandes derart ausgebildet, dass er nach innen hin, d. h. von der Saugscheibe weg, zurückspringt. Hierdurch wird ein geringfügiges Abheben der Saugscheibe von der Befestigungsfläche an der Tellerrandinnenseite erleichtert.

Der in die Tellerrandnut eingreifende Saugscheibenvorsprung kann bei nicht-teilvakuumbeaufschlagtem Saugteller von der radial außen liegenden Seite der Tellerrandnutflanke radial beabstandet sein. Der Saugscheibenvorsprung kann hierbei an der radial innen liegenden Nutflanke anliegen oder von dieser nur geringfügig beabstandet sein, insbesondere geringer als der Abstand der radial außen liegenden Nutflanke von dem Saugscheibenvorsprung. Dies kann sich jeweils insbesondere auf die mittlere Höhe der Nutflanke bzw. den nutgrundseitigen oder saugscheibenseitigen Bereich der Nutflanke beziehen. Hierdurch wird zum Einen das Einsetzen der Saugscheibe in die Tellerrandnut erleichtert, zum Anderen kann hierdurch die bei Einwirkung von Scherkräften von der Saugscheibe eingenommene Gestalt optimal definiert werden.

Allgemein können die radial innen liegende und radial außen liegende Seite des abstützenden Saugscheibenvorsprungs die gleiche Querschnittskontur und/oder den gleichen Anstellwinkel zur Saugheberlängsachse aufweisen, beispielsweise können beide zumindest im Wesentlichen senkrecht zur Saugscheibenhauptebene stehen. Der Saugscheibenvorsprung kann an seiner radial innen liegenden und radial außen liegenden Seite auch unterschiedliche Flankengeometrien aufweisen, insbesondere unterschiedliche Querschnittskonturen und/oder unterschiedliche Anstellwinkel zur Saugheberlängsachse, insbesondere wenn der Saugscheibenvorsprung in eine Tellerrandnut eingreift. Die radial innen liegende Seite des Vorsprunges kann steiler zur Saugheberlängsachse angestellt sein, als die außen liegende Seite des Vorsprungs. Die radial innen liegende Seite des Vorsprunges kann einen Winkel zu der Achse von 0 - 15°, vorzugsweise 1 - 10° oder bis 6° aufweisen, z.B. ca. 2 - 4°. Der radial außen liegende Flankenwinkel des Vorsprunges zur Saugheberlängsachse kann 0 - 25°, vorzugsweise 1- 20° oder 2 - 15° betragen, vorzugsweise 5 - 15°. Die radial innen liegende und/oder radial außen liegende Seite des Vorsprunges kann zusätzlich angefast sein.

Die Bereiche der Saugscheibe, die in Saugheberlängsrichtung der radial inneren und äußeren Tellerrandnutflanke gegenüberliegen, können einen Höhenversatz zueinander aufweisen. Der der radial innen liegenden Nutflanke gegenüberliegende Saugscheibenbereich kann gegenüber dem der radial außenliegenden Nutflanke gegenüberliegenden Saugscheibenbereich in der Höhe zurückversetzt sein. Der zum Saugscheibenvorsprung radial innen liegende Saugscheibenbereich, der an den Saugscheibenvorsprung seitlich angrenzen kann, kann eine rinnenförmige Vertiefung aufweisen, die gegebenenfalls zur Saughebermitte hin schräg ansteigen kann. Die Saugscheibenstärke auf Höhe der Vertiefung kann verglichen mit der Stärke derselben im Zentrumsbereich und/oder am Außenrand relativ gering sein, beispielsweise nur 5-6mm oder 3-4mm oder weniger, sie kann ≤ 10-20 % oder ≤ 30-40% oder weniger als die Stärke der Saugscheibe auf Höhe des Außenrandes derselben sein. Diese Vertiefung kann den radial innen liegenden Tellerrandbereich aufnehmen. Die Vertiefung kann konisch oder geneigt zur Saugheberhauptebene verlaufen und zur mittleren Saugheberlängsachse hin ansteigen. Die Vertiefung kann eine radiale Ausdehnung von ≥ 5 - 10 mm oder ≥ 15-20 mm haben. Die Neigung der Saugscheibenoberfläche in Bereich der Vertiefung zur Saugheberhauptebene, die bei fixierten Saugheber parallel zur Befestigungsfläche verläuft, kann ≥ 5 - 10°, ≥ 15 - 20° oder ≥ 25-30° sein, vorzugsweise ≤ 30-45° oder ≤ 60°. Da die Saugscheibe im Bereich der rinnenförmigen Vertiefung flexibler als am Außenrand ist, kann dies beim Lösen des Saughebers von der Befestigungsfläche bzw. bei Vakuumentlastung zu einem noch unerwünschten andauernden Anhaften des Saugscheibenbereich an der Befestigungsfläche führen. Hierzu kann die rinnenförmige Vertiefung mit lokalen Versteifungen versehen sein, die einstückig an der Saugscheibe angeformt sein können. Hierdurch wird lokal ein zu starkes Anhaften der Saugscheibe verhindert. Diese Bereiche können eine Belüftung des Hohlraumes und damit ein Lösen des Saughebers insgesamt erleichtern. Die Versteifungen können als Stege oder Rippen ausgebildet sein, die sich vorzugsweise in radialer Richtung über die Vertiefung erstrecken können und die von dem Tellerrand zumindest teilweise aufgenommen sein können, z.B. von einer sich radial erstreckenden Nut oder Einbuchtung desselben, die zur Saugscheibenoberseite offen sein können. Diese Versteifungen können zugleich bei geeigneter Ausführung als die weiter unten beschriebene Verdrehsicherung fungieren, die Verdrehsicherung kann auch zusätzlich vorgesehen sein. Ferner kann ein Ablösen der Saugscheibe von der Befestigungsfläche durch Vorsprünge an der Saugscheibenunterseite im Bereich des Tellerrandes gefördert werden, wobei diese Vorsprünge bei Vakuumbeaufschlagung komprimiert werden und bei Druckentlastung des Saughebers eine Rückstellkraft auf den Saugscheibenrand ausüben, welche ein Lösen des Saugscheibenrandes in diesem Bereich erleichtert. Vorzugsweise sind diese Vorsprünge etwas radial einwärts zu dem Abdichtbereich der Saugscheibe an der Befestigungsfläche angeordnet.

Weiterhin ist es vorteilhaft, wenn bei nicht teilvakuumbeaufschlagtem und/oder zumindest im wesentlichen maximal teilvakuumbeaufschlagtem Saugheber zwischen Oberseite des Saugscheibenvorsprungs und Nutgrund eine Spalt verbleibt, beispielsweise von ≥ 0,5-1 mm oder ≥ 2-3 mm sein, gegebenenfalls ≤ 7-10 mm oder ≤ 4-5 mm sein. Hierdurch wird eine optimale Anpressung der Saugscheibe an der Befestigungsfläche und Verankerung der Saugscheibe in der Tellerrandnut auch bei Scherkräften erzielt, da der Vorsprung bei Scherkräften auch in der Nut seitlich nach radial außen und/oder innen verkippen kann.

Die Höhe des einer lateralen Verschiebung entgegenwirkenden Saugscheibenvorsprungs kann gemessen von der Saugscheibenoberseite kann ≥ 0,5 mm, ≥ 1- 2 mm oder ≥ 3- 4 mm sein, die Höhe kann ≤ 8 - 10 mm oder ≤ 4 - 6 mm sein, beispielsweise im Bereich von 2 - 6 mm.

Vorzugsweise weist weiterhin die Saugscheibe eine Verdrehsicherung gegenüber dem Saugteller auf, so dass diese einander gegenüber zumindest im Wesentlichen unverdrehbar sind. Diese Verdrehsicherung kann unabhängig von der Betätigungseinrichtung zur Erzeugung des teilvakuumbeaufschlagten Hohlraumes vorgesehen sein. Als Verdrehsicherung können ein oder mehrere radial und/oder axial vor- und/oder zurückspringende Bereiche der Saugscheibe mit korrespondieren Bereichen des Saugtellers wechselwirken, beispielsweise in entsprechende Aufnahmen des Saugtellers eingreifen. Die verdrehsichernden Vorsprünge können an der radial außen liegenden und/oder radial innen liegenden Seite des in die Tellerrandnut eingreifenden Saugscheibenvorsprungs angeordnet sein. Vorzugsweise sind die als Verdrehsicherung dienenden Vorsprünge an dem in die Tellerrandnut eingreifenden Saugscheibenvorsprung angeformt. Die Tellerrandnut kann hierzu taschenförmige Ausnehmungen aufweisen, die in axialer und/oder radialer Richtung zur Nut hin offen sind. Die verdrehsichernden Vorsprünge können über den Gesamtumfang der Saugscheibe vorzugsweise gleichmäßig verteilt angeordnet oder nur bereichsweise an dieser angeordnet sein, insbesondere an einem Bereich der Saugscheibe auf Höhe einer Mittellinie oder mittleren Zone derselben, welche die Saugscheibenmitte quert und im Wesentlichen senkrecht zur Scherrichtung angeordnet ist. Der Saugscheibenrand dieser Zone wird im Allgemeinen geringer auf Scherung belastet und kann sich besser seitlich auf sich selbst abstützen.

Bei dem erfindungsgemäßen Saugheber kann die Saugscheibe aus einem relativ weichen Gummimaterial bestehen, welches sich besonders gut an die Befestigungsfläche anschmiegen kann. Das Gummimaterial kann eine Härte von 20 - 75 Shore A aufweisen, vorzugsweise eine Härte von ≤ 65 - 70 Shore A, oder ≤ 55 - 60 Shore A. Die Härte kann ≥ 30-35 Shore A oder ≥ 40-45 Shore A sein. Besonders bevorzugt beträgt die Härte der Saugscheibe ca. 45-50 Shore A.

Die Saugscheibe kann durch ein im mittleren Bereich derselben angeordnetes Halteelement an dem Saugteller gehaltert sein, welches zugleich Teil des Betätigungsmechanismus zur Erzeugung des Teilvakuums in dem Hohlraum sein kann. Die Erzeugung des Teilvakuums in dem Hohlraum kann allgemein dadurch erfolgen, dass der mittlere Saugscheibenbereich von der Befestigungsfläche beabstandet wird, wenn der Saugheber an der Befestigungsfläche anliegt. Der mittlere Bereich der Saugscheibe kann hierzu an einer vorzugsweise manuellen Betätigungseinrichtung zur Vakuumbeaufschlagung des Hohlraumes ankoppeln. Hierzu kann ein betätigbarer Bolzen vorgesehen sein, welcher an einer Handhabe ankoppelt. Der Bolzen bzw. das Ankoppelungsorgan des Betätigungsmechanismus an der Saugscheibe kann gegen eine Feder betätigbar sein, so diese bei Betätigung gespannt wird. Das manuelle Betätigungsorgan kann in Art eines Kipp- oder Kniehebels ausgebildet sein.

Die Erfindung wird nachfolgend beispielhaft erläutert und anhand der Figuren beispielhaft beschrieben. Es zeigen:
- Figur 1: eine Querschnittsdarstellung eines erfindungsgemäßen Saughebers mit Saugteller,
- Figur 2: eine Detailansicht nach Figur 1,
- Figur 3: eine Querschnittsdarstellung des-Tellerringes nach Figur 2,
- Figur 4: eine Querschnittsdarstellung eines Tellerringes einer alternativen Ausführungsform,
- Figur 5: eine Darstellung des Saugscheibenbereichs nach Figur 2 im Querschnitt,
- Figur 6: eine Draufsicht auf eine Saugscheibe einer alternativen Ausführungsform,
- Figur 7: schematische Darstellungen des Saughebers nach Figur 1 in unterschiedlichen Belastungszuständen,
- Figur 8,9: schematische Darstellungen von Saughebern weiterer alternativer Ausführungsformen.

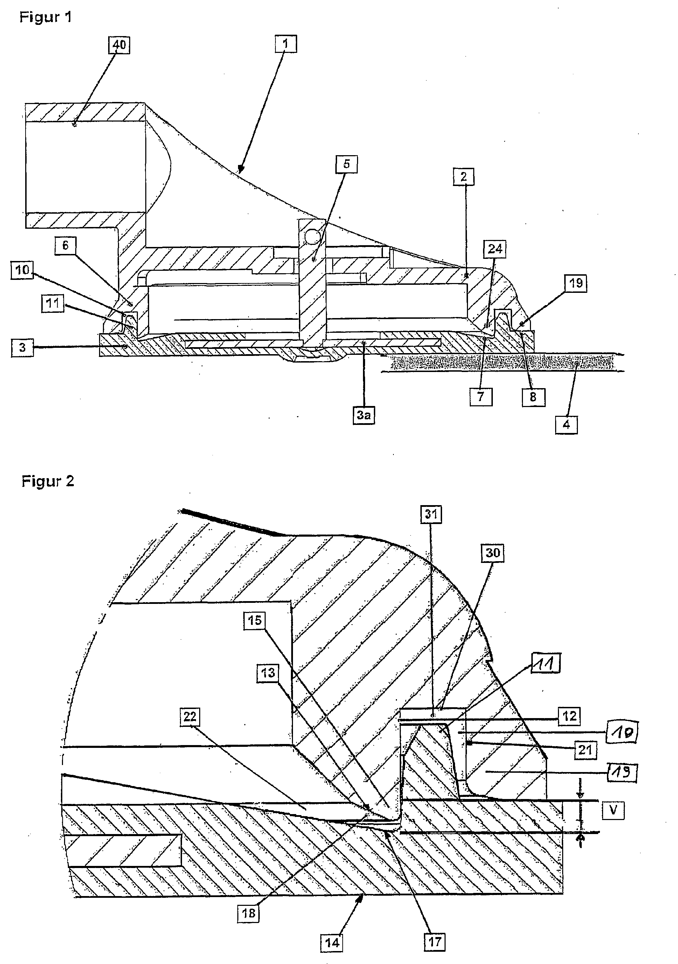

Der Saugheber 1 nach Figur 1 weist einen Saugteller 2 mit deformierbarer Saugscheibe 3 auf, wobei zwischen der Saugscheibe und der angedeuteten Befestigungsfläche 4 ein Teilvakuum ausgebildet werden kann, um den Saugheber temporär an der Befestigungsfläche zu fixieren. Hierzu ist der mittlere Bereich der Saugscheibe bei an der Befestigungsfläche 4 anliegendem Saugheber mittels des Betätigungsorgans 5, welches hier als Bolzen ausgebildet ist, von der Befestigungsfläche beabstandbar. Dies kann durch ein an dem Betätigungsorgan 5 angreifendes manuelles Betätigungsmittel, z. B. in Art eines Kniehebels, erfolgen. Bei Lageveränderung des Betätigungsorgans senkrecht zur Saugscheibe kann eine Feder (nicht dargestellt) vorgespannt werden, die den Bolzen wendelförmig umgeben kann. Das Betätigungsorgan kann eine einem mittleren Mitnehmerbereich 3a der Saugscheibe angreifen, die hier in Form einer die Saugscheibe unterstützenden Platte ausgebildet ist, die an der Saugscheibe anvulkanisiert oder von der Saugscheibe zumindest teilweise umgeben ist. Der umlaufende Tellerrand 6 des Saugtellers, der den vakuumbeaufschlagten Hohlraum umgibt, kann sich dann an dem umlaufenden Stützbereich 7 der Saugscheibe abstützen oder verpressen.

Erfindungsgemäß weist der Tellerrand 6 eine sich teilumfänglich oder vorzugsweise vollumfänglich um diesen erstreckende Nut 10 auf, in welche ein dem Tellerrand zugewandter Vorsprung 11 der Saugscheibe eingreift, welcher sich zumindest bei teilvakuumbeaufschlagter Saugscheibe bei Scher- und/oder Torsionsbelastung um die Saugtellerlängsachse an einer Nutflanke 12 der Nut seitlich abstützt, insbesondere an der radial innenliegenden Nutflanke. Die Abstützung bzw. Verpressung erfolgt vorzugsweise unter Ausbildung eines flächigen Anlagebereiches des Vorsprungs an der Nutflanke. Der Vorsprung 11 kann derart ausgebildet sein, dass dieser bereits bei nicht-teilvakuumbeaufschlagter Saugscheibe in die Nut eingreift. Der Abstützvorsprung der Saugscheibe kann im Wesentlichen über seine gesamte Höhe an dem Abstützvorsprung des Tellerrandes bzw. der korrespondierenden Nutflanke anliegen. Der Saugscheibenvorsprung kann durch die Teilvakuumbeaufschlagung des Hohlraumes seitlich, insbesondere radial nach außen verkippen. Der Vorsprung kann radial außerhalb des Verstärkungsbereichs 3a der Saugscheibe angeordnet sein. Der Vorsprung, der stegförmig ausgebildet sein kann, kann eine Höhe von ≥ 1 - 2 mm aufweisen. Durch die Anordnung dieses Saugscheibenvorsprunges in der Tellerrandnut kann der Saugheber bei gleicher Saugscheibengröße höhere Scherkräfte über eine möglichst lange Haltedauer aufnehmen.

Vorzugsweise liegt bei zumindest annähernd maximaler Vakuumbeaufschlagung der auf Höhe oder zumindest unmittelbar benachbart der radial innen liegenden Nutflanke 12 angeordnete Bereich 13 des Tellerrandes an der Saugscheibe an, so dass die Saugscheibe beidseitig der Nut von dem Tellerrand abgestützt wird.

Die Saugscheibe und der Tellerrand können derart ausgebildet sein, so dass bei zumindest annähernd maximaler Vakuumbeaufschlagung die Saugscheibe auf Höhe der radial innen liegenden Nutflanke 12 der Tellerrandnut sich zumindest geringfügig von der Befestigungsfläche für den Saugheber abhebt. Die Anhebung dieses Bereichs 14 wird nach dem Ausführungsbeispiel dadurch ermöglicht, dass zwischen der vorstehenden Nase 15 des Tellerrandes benachbart der radial innen liegenden Nutflanke 12 und dem in Saugheberlängsrichtung gegenüberliegenden Bereich 17 der Saugscheibe ein Spalt 18 verbleibt. Es versteht sich, dass die Nase 15 dieselbe Umfangserstreckung wie die Tellerrandnut 10 haben kann. Bei Vakuumbeaufschlagung des Saughebers und somit bei Anhebung des mittleren Saugscheibenbereichs gegenüber dem Randbereich derselben kann dann die Saugscheibe auf Höhe der Nase 15 abgesehen von elastischen Deformationen der Saugscheibe um in etwa die Spalthöhe angehoben werden. Hierdurch wird die radiale Erstreckung der Anlagefläche der Saugscheibe an der Befestigungsfläche bzw. der Zwischenraum zwischen Saugscheibe 3 und Befestigungsfläche 4 vergrößert, wodurch die Anpresskraft des Saughebers an der Befestigungsfläche entsprechend erhöht werden kann.

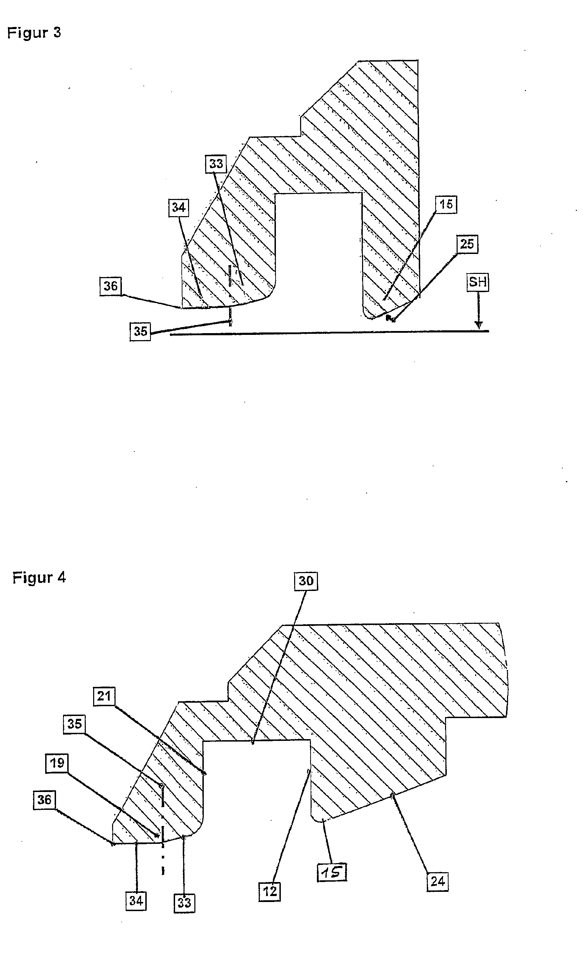

Wie in Figur 2 dargestellt, kann der die radial innen liegende Nutflanke 12 bereitstellende Randbereich des Tellerrandes weiter in Richtung auf die Saugscheibe hin vorstehen, als der die radial außen liegende Nutflanke aufweisende Randbereich 19 des Tellerrandes. Hierzu kann der der inneren Nutflanke in der Höhe gegenüberliegende Bereich 20 der Saugscheibe in vertikaler Richtung gegenüber dem radial außen liegenden stirnseitigen Tellerrandbereich 19 zurückversetzt angeordnet sein, so dass sich ein Höhenversatz V ergibt. Die Saugscheibe kann hierbei einen konisch zulaufenden Bereich oder eine Rinne 22 aufweisen, welche den radial innen liegenden Tellerrandbereich 24 aufnimmt, welcher die Nase 15 aufweisen kann, so dass sich dieser Bereich der Saugscheibenoberseite bei Teilvakuumbeaufschlagung an den inneren Tellerrandbereich 24 anlegt. Die Rinne bzw. der konisch zulaufende Bereich kann zur Saugscheibenmitte hin mit geringem Gefälle ansteigen. Alternativ kann gemäß Figur 4 auch der radial innen liegende Tellerrandbereich mit der inneren Nutflanke 12 gegenüber dem radial außen liegenden Tellerrandbereich mit der außen liegenden Nutflanke 21 in der Höhe zurückversetzt sein. Die Saugscheibe kann hierbei auf Höhe der beiden Tellerrandbereiche 19, 24 beidseitig des Saugscheibenvorsprungs 11 die gleiche Höhe aufweisen, so dass zwischen dem inneren Tellerrandbereich und der zugewandten Saugscheibenseite ein Spalt verbleibt und bei vakuumbeaufschlagtem Saugheber der Bereich 17 der Saugscheibenoberseite an dem radial innen liegenden Tellerrandbereich 24 anliegen kann.

Aufgrund des Tellerrandes gegenüber der Saugscheibe wird ein Einrollen und/oder Deformieren der Saugscheibe bei Scherkräften deutlich erschwert, so dass höhere Scherkräfte aufgenommen werden können. Ein weiter radialer Überstand der Saugscheibe gegenüber dem Saugteller ist hierdurch entbehrlich, möglicherweise steht die Saugscheibe jedoch noch geringfügig über den Tellerrand hervor, um als seitlicher Aufprallschutz zu dienen. Die aus einem Gummimaterial bestehende Saugscheibe weist nach dem Ausführungsbeispiel eine Härte von ca. 50 Shore A auf.

Damit sich die Saugscheibe an den zur Nut radial innen liegenden Bereich des Tellerrandes anschmiegen kann, ist der an innere Nutflanke 12 angrenzende Tellerrandbereich von der Saugscheibe weg zurückspringend ausgebildet, nach den Figuren 2 und 4 angeschrägt ausgebildet, wobei nach Figur 2 verschiedene radiale Bereiche mit unterschiedlicher Neigung vorgesehen sein können. Der Anstellwinkel des Tellerrandbereichs 25 zur Saugscheibenhauptebene kann in Richtung auf die Saugscheibenmitte hin zunehmen. Der Anstellwinkel des Tellerrandbereiches benachbart der inneren Nutflanke 12 kann 2 - 50° oder 5 - 40° betragen, z.B. ca. 10 - 20°. Der zurückspringende Tellerrandbereich kann im Querschnitt in Art einer Nase zur Saugscheibe gerichtet sein, er kann bogenförmig ausgebildet sein.

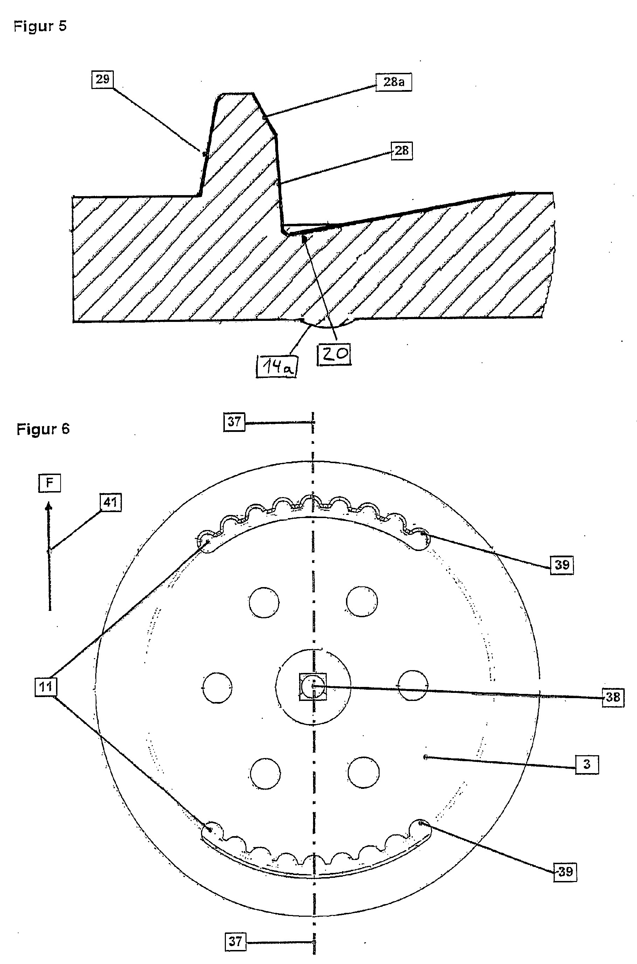

Der in die Tellerrandnut eingreifende Saugscheibenvorsprung kann auf der radial innen liegenden und radial außen liegenden Seite 28, 29 unterschiedliche Geometrien aufweisen. Die innen liegende Seite 28 kann zu der Saugscheibenhauptebene steiler angestellt sein als die außen liegende Seite 29. Die Anstellwinkel können für die Seiten 28, 29 können beispielsweise ca. 1-10°, z.B. 2-6° betragen (innen) bzw. ca. 2-20°, z.B. 5-15° oder ca. 10° betragen (außen), siehe Figur 5. Die innen liegende Seite des Vorsprunges kann zusätzlich mit einer Fase 28a versehen sein, was die Einführung des Vorsprunges in die Nut erleichtert. In lose montiertem Zustand, d.h. ohne Vakuumbeaufschlagung, kann die radial innen liegende Seite des Vorsprunges von der zugeordneten Nutflanke 12 nur geringfügig beabstandet sein oder zumindest im Bereich des Fußes des Vorsprunges an dieser anliegen, die Außenseite 29 des Vorsprunges kann von der äußeren Nutflanke 21 radial beabstandet sein. Der Vorsprung kann somit insgesamt mit einer leichten Pressung in der Nut aufgenommen sein. Am Nutgrund 30 kann gegenüber der Oberseite des Vorsprunges ein gewisser Spalt 31 verbleiben, um Deformationen der Saugscheibe bei Scherbeanspruchung auffangen zu können, was allgemein gelten kann. Um ein Ablösen der Saugscheibe von der Befestigungsfläche zu erleichtern ist an der Saugscheibenunterseite ein Vorsprung 14a vorgesehen, der auf Höhe des Spaltes 18 oder geringfügig radial zu diesem nach innen versetzt angeordnet ist und bei Vakuumbeaufschlagung des Saughebers komprimiert wird.

Der Tellerrand ist derart ausgebildet, dass dieser bei Vakuumbeaufschlagung der Saugscheibe in radialer Richtung unterschiedliche Anpresskräfte gegenüber der Saugscheibe ausübt, vorzugsweise nach radial auswärts hin zunehmende Anpresskräfte, wodurch auch die radiale Breite der Anpressfläche der Saugscheibe an die Befestigungsfläche kontrolliert werden kann. Hierzu sind Tellerrand und Saugscheibe derart strukturiert, dass sich in unbelastetem Zustand des Saugteller bei lose auf der Saugscheibe aufgelegtem Saugteller, d.h. bei Nicht-Teilvakuumbeaufschlagung, zwischen Tellerrand und Saugscheibenoberseite ein Spalt oder Freiraum verbleibt, der sich vorzugsweise zum Tellerinneren hin bzw. zur Nut hin öffnet. Der Tellerrand kann hierzu nach außen hin zur Saugscheibe abfallen und/oder die Saugscheibenoberfläche auf Höhe des Tellerrandes kann nach radial innen hin abfallen. Der außenseitig der Nut angeordnete Tellerrandbereich kann verschiedene radiale Bereiche mit unterschiedlichem Anstellwinkel aufweisen, vorzugsweise nimmt der Anstellwinkel zur Saugscheibe hin radial nach außen hin ab. Der zu der Mittellinie 35 radial innen liegende Tellerrandbereich 33 kann somit beispielsweise einen Anstellwinkel von ca. 5-15° aufweisen, z.B. ca. 10°, der zu der Mittellinie 35 radial außen liegende Tellerrandbereich 34 einen Anstellwinkel von ca. 0,5-5°, z.B. ca. 1 - 2°. Der Anlagebereich des Tellerrandes bei lose auf die Saugscheibe aufgesetztem Teller ist hier somit radial außen liegend zu der Mittellinie 35 des Tellerrandbereichs angeordnet, welcher die Tellerrandnut außenseitig umgibt (siehe Figur 3). Der Anlagebereich wird hier praktisch durch die Außenkante 36 des Tellerrandes gebildet. Die Außenkante des Tellerrandes kann auch angefast sein, so dass der Auflagerand, der bei Vakuumbeaufschlagung mit der größten Anpresskraft an der Saugscheibe anliegt, radial etwas nach innen versetzt ist, jedoch vorzugsweise noch außerhalb der Mittellinie 35 des äußeren Tellerrandbereiches angeordnet ist. Bei Scherbelastung des Saughebers kann der Saugteller auf der der Scherkraftrichtung gegenüber liegenden Seite von der Saugscheibe abheben.

Die Saugscheibe kann ferner eine Verdrehsicherung aufweisen, wozu der in die Tellerrandnut eingreifende Vorsprung der Saugscheibe mit seitlich und/oder axial vorstehenden Nocken 39 versehen sein kann, welche in korrespondierende taschenförmige Ausnehmungen der Tellerrandnut eingreifen können. Diese Nocken oder Haltevorsprünge können an der Innenseite oder der Außenseite des in die Nut eingreifenden Vorsprunges 11 angeordnet sein. Gegebenenfalls können diese Vorsprünge oder Nocken auch unmittelbar benachbart dem Saugscheibenvorsprung an der Saugscheibe angeordnet sein. Die Nocken können eine radiale bogenförmige, z.B. kreisbogenförmige, Außenseite aufweisen. Gegebenenfalls können im Bereich der oder in der Tellerrandnut auch Vorsprünge des Saugteller in Ausnehmungen der Saugscheibe als Verdrehsicherung eingreifen, insbesondere in Ausnehmungen an dem in die Nut eingreifenden Vorsprung 11, wobei die Ausnehmungen an der Oberseite desselben angeordnet sein können. Der Vorsprung 11 kann sich somit, wie in Figur 6 dargestellt, nur über einen Teilumfang der Saugscheibe erstrecken, auch wenn er vorzugsweise vollumfänglich ausgebildet ist. Der Vorsprung 11 ist hierbei derart angeordnet, dass die Verbindungslinie des mittleren Bereichs 37 des Vorsprunges mit der Saugscheibenmitte 38 parallel zu der Scherrichtung der Saugscheibe liegt bzw. parallel zur Zugrichtung in der Saugscheibenhauptebene. Der Vorsprung ist insbesondere auf der der Scherrichtung zugewandten Seite der Saugscheibenmitte angeordnet, so dass sich in Scherrichtung der Saugheber an dem Vorsprung abstützt. Um den Saugheber bei um 180° gedrehter Anordnung, d.h. bei entgegen gesetzten Scherrichtungen, einsetzen zu können, sind vorzugsweise zumindest zwei Vorsprünge 11 der Saugscheibenmitte gegenüberliegend angeordnet. Bei einer derartigen Ausgestaltung des Saughebers sollte die Scherrichtung durch die Halteeinrichtung wie z.B. einen Handgriff des Saughebers vorgegeben sein, um Fehlbedienungen zu vermeiden. Dies ergibt sich bei einem Saugheber mit zwei durch z.B. einen Handgriff 40 verbundenen Saugtellern oder einem Saugheber mit nur einem Saugteller, der einen gegenüber dem Saugteller im wesentlichen lagefixierten Handgriff aufweist, praktisch zwangsläufig, da bei üblicher Handhabung, beispielsweise dem Tragen von Lasten, der Saugheber quer oder senkrecht zu der Handgrifflängsrichtung kraftbeaufschlagt wird.

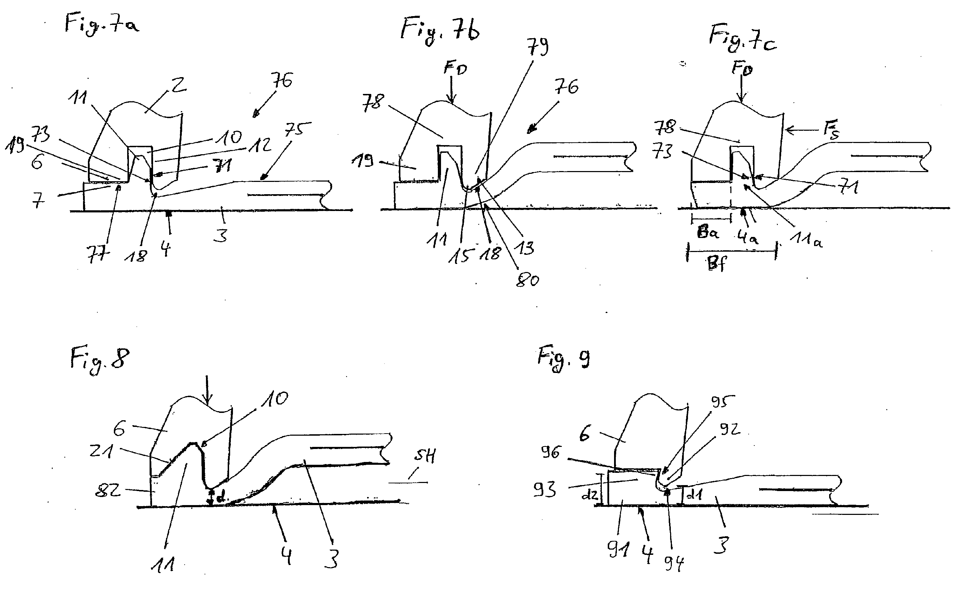

Figur 7 zeigt schematische Darstellungen eines Saughebers nach Figur 1 in drei unterschiedlichen Zuständen. In Figur 7a, die im Wesentlichen Figur 2 entspricht, ist der Saugheber unbelastet, d.h. weder vakuumbeaufschlagt noch scherbeansprucht. Die seitliche Abstützfläche 71 des Tellerrandes 6 wird hier durch die radial innere Nutflanke 12 bereitgestellt, die Abstützfläche 73 des Saugscheibenrandes durch die radial innen liegende Seitenfläche des Saugscheibenvorsprunges 11, wobei durch Zusammenwirkung dieser Abstützflächen einer lateralen Verschiebung des Saugtellers 2 gegenüber der Saugscheibe 3 bei Scherkrafteinwirkung entgegengewirkt wird. Der die seitliche Abstützfläche des Tellerrandes bereitstellende Tellerrandbereich, hier der radial innenliegende Tellerrandbereich, ist in der Höhe durch einen Spalt 18 von der Saugscheibenoberseite 75 signifikant beabstandet. Dies gilt auch für den Bereich mit dem geringsten Abstand zu der Saugscheibenoberseite, der hier durch die Nase des 15 Tellerrandbereiches bereitgestellt wird. Der Spalt 18 mündet radial einwärts in den Hohlraum 76 zwischen Saugteller und Saugscheibe, wobei sich der Spalt in Richtung auf den Hohlraum erweitert. Der Saugteller stützt sich mit seinem radial außen liegenden Tellerrandbereich 19 an der Saugscheibenoberseite ab, nach dem Ausführungsbeispiel ist hier ein flächiger Anlagebereich 77 gegeben, der Anlagebereich kann im Wesentlichen parallel zur Befestigungsfläche verlaufen.

Figur 7b zeigt den Saugheber nach Fig. 7a in zumindest im Wesentlichen maximal vakuumbeaufschlagtem Zustand, wodurch der Saugheber durch die Druckkraft F_{D} an die Befestigungsfläche angepresst wird. Der radial außen liegenden Tellerrandbereich 19 stützt sich an der Saugscheibenoberseite ab, wodurch dieser Bereich der Saugscheibe (vorzugsweise im Wesentlichen nur dieser Saugscheibenbereich) druckbeaufschlagt wird. Zugleich ist hierdurch ein großer effektiver Berührungsradius der Saugscheibe mit dem Tellerrand gegeben, wodurch das Widerstandsmoment gegen Verscherung erhöht werden kann. Die radiale Breite Ba des Anlagebereichs 77 ist somit deutlich geringer als die Breite Bf des Fußes 78 des Tellerrandes (siehe Fig. 7c), wodurch sich am äußeren Tellerrand eine hohe Anpresskraft gegenüber der Befestigungsfläche 4 und damit in diesem Bereich eine hohe Dichtwirkung gegenüber Vakuumverlust des Hohlraumes ergibt. Zwischen dem radial innenliegenden Tellerrandbereich 13 und dem gegenüberliegenden Bereich der Saugscheibe kann ein Rest des Spaltes 18 verbleiben oder die Saugscheibe vorzugsweise ohne wesentliche Kraftbeaufschlagung lose an dem Tellerrandbereich anliegen, gegebenenfalls auch mit geringer Kraftbeaufschlagung. Der Tellerrandabstützvorsprung 79 kann sich mit seiner radial außen liegenden Seitenfläche, die der Abstützfläche 71 entspricht, an dem Saugscheibenstützvorsprung zumindest über einen Teil dessen Höhe, insbesondere im Bereich dessen Fußes 78, in Scherrichtung abstützen. Die Saugscheibe kann sich unterhalb des radial innen liegenden Tellerrandbereichs 13 unter Ausbildung eines Spaltes 80 von der Befestigungsfläche abheben. Die Saugscheibe liegt über die radiale Erstreckung des äußeren Tellerrandbereichs und über einen Teil oder zumindest im Wesentlichen die gesamte Breite des Saugscheibenvorsprunges oder eventuell auch weiter radial einwärts an der Befestigungsfläche an.

Bei Vakuumbeaufschlagung und zusätzlicher Scherbelastung durch Scherkräfte F_{S} nach Fig. 7c kann der durch die Anlageflächen 71,73 erzeugte Anlagebereich von Tellerrandstützvorsprung 79 und Saugscheibenstützvorsprung 11 vergrößert werden. Der Tellerrand drückt mit seinem radial außen liegenden Bereich 19 (beispielsweise nur mit diesem) die Saugscheibe 3 an die Befestigungsfläche 4. An die Befestigungsfläche angedrückt wird die Saugscheibe über die radiale Breite des radial außen liegenden Tellerrandbereichs 19 und zumindest im Wesentlichen die Breite des Saugscheibenvorsprunges 11. Zwischen dem radial innenliegendem Tellerrand und der Saugscheibe kann weiterhin ein Rest des Spaltes 18 verbleiben oder die Saugscheibe kann im Wesentlichen lose oder mit geringer Anpresskraft an dem Tellerrandbereich anliegen. Insgesamt können sich hierdurch bei zumindest im Wesentlichen maximaler Vakuumbeaufschlagung Zonen des Tellerrandes unterschiedlicher Anpresskraft an die Saugscheibe ergeben, auch wenn keine Scherkräfte auf den Saugteller ausgeübt werden, beispielsweise durch Verringerung des Spaltes bei Vakuumbeaufschlagung.

Durch die Anlageflächen 71 des Tellerrandbereichs bzw. Tellerrandvorsprunges 13 auf die Anlagefläche 73 des Saugscheibenvorsprunges wird die Saugscheibe bei Scherkrafteinwirkung zusätzlich gegen die Befestigungsfläche 4 druckbeaufschlagt, wodurch die Scherkräfte abgeleitet werden. Durch die Druckkraftübertragung wird der den Anlageflächen 71, 73 (d.h. dem Wechselwirkungsbereich derselben) in Scherkraftrichtung vorgelagert Saugscheibenbereich, der in Bezug auf die Anlageflächen radial weiter außen angeordnet ist, gegen den Bereich 4a der Befestigungsfläche zusätzlich angepresst. Ferner ist die die Ankoppelungsstelle der eine laterale Verschiebung entgegenwirkenden Mittel an dem Saugteller, hier die Basis 11a des Saugscheibevorsprunges 11, weiter radial auswärts angeordnet als die Ankoppelungsstelle der einer lateralen Verschiebung entgegenwirkenden Mittel des Saugtellers und der Saugscheibe, nämlich den Anlageflächen 71, 73.

Fig. 8 zeigt eine Abwandlung eines Saughebers nach Figur 7 in vakuumbeaufschlagtem Zustand, wobei das oben Gesagte entsprechend gelten kann. Im Unterschied hierzu erweitert sich die Tellerrandnut 10 zur Saugscheibe hin. Tellerrandnut 10 und Saugscheibenvorsprung 11 sind im Wesentlichen dreieckig ausgebildet. Unabhängig hiervon füllt der Saugscheibenvorsprung die Tellerrandnut zumindest im Wesentlichen vollständig aus, was allgemein gelten kann. Die seitlichen Abstützflächen 71, 73 von Tellerrand und Saugscheibenvorsprung sind im Wesentlichen senkrecht zur Saugscheibenhauptebene bzw. zur Befestigungsfläche angeordnet. Allgemein sind die beiden Abstützflächen 71, 73 steiler zur Saugscheibenhauptebene SH (dargestellt für den nicht vakuumbelasteten Zustand) angestellt, als die radial außen liegende Tellerrandnutflanke 21 , die beispielsweise einen Winkel von 30°-60°, z.B. ca 45° zur Saugscheibenhauptebene SH aufweisen kann. Der Tellerrand 6 drückt bei zumindest im wesentlich maximaler Teilvakuumbeaufschlagung im Bereich der radial außen liegenden Nutflanke 21 den Saugscheibenvorsprung 11 gegen die Befestigungsfläche 4. Der radial außenliegende Saugscheibenbereich 82, der radial außenliegend zu der Nut 10 (oder allgemein radial außenliegend zu der Abstützfläche von Tellerrand und Saugscheibe) angeordnet ist, hat eine größere Höhe als der Spalt bzw. Abstand d zwischen innerer Nutflanke bzw. innerem Nutflankenbereich und der Befestigungsfläche. Im Übrigen sei auf die Ausführungen zu Figur 7 vollinhaltlich verwiesen.

Figur 9 zeigt eine weitere Abwandlung, wobei in dieser Darstellung die Saugscheibe 3 nicht vakuumbeaufschlagt ist. Der Tellerrand 6 und Saugscheibenrand 91 weisen sich hintergreifende und bei Scherkraftausübung in Scherkraftrichtung gegeneinander abstützende Vorsprünge 92, 93 auf, wobei der Abstützvorsprung 92 des Tellerrandes radial einwärts zu dem Abstützvorsprung 93 der Saugscheibe angeordnet ist. Auch hier ist zwischen dem den Tellerrandvorsprung bereitstellenden Tellerrandbereich und der Saugscheibenoberseite ein Spalt 94 vorgesehen, der auch nach Vakuumbeaufschlagung nach teilweise bestehen kann oder in dessen Bereich Saugscheibe und Tellerrandbereich im Wesentlichen lose oder mit nur geringer Kraftbeanspruchung gegeneinander anliegen. Der Abstützvorsprunges 92 des Tellerrandes weist von der Befestigungsfläche einen minimalen Abstand d1 auf, der größer ist als die Materialstärke d2 bzw. Höhe der Saugscheibe im Bereich ihres radialen Außenrandes. Die radiale Innenseite des Saugscheibenvorsprunges und die Außenseite des Tellerrandvorsprunges sind in Bezug auf die vertikale Richtung mit Hinterschneidungen 95, 96 versehen, so dass diese die sich zusätzlich verkrallen. Die aneinander anliegenden Flächen von Tellerrand und Saugscheibenoberfläche verlaufen hier horizontal, ohne dass dies erforderlich ist. So können beide Flächen beispielsweise auch nach radial außen hin zur Befestigungsfläche hin abfallen.

### Bezugszeichenliste

- 1.: Saugheber
- 2: Saugteller
- 3: Saugscheibe
- 3a: Mitnehmerbereich
- 4: Befestigungsfläche
- 5: Betätigungsorgan
- 6: Tellerrand
- 7, 8: Stützbereich
- 10: Nut
- 11: Vorsprung
- 11a: Basis
- 12: Nutflanke
- 13: Tellerrandbereich
- 14, 14a: Saugscheibenbereich
- 15: Nase
- 17: Saugscheibenbereich
- 18: Spalt
- 19: Tellerrandbereich
- 20: Saugscheibenbereich
- 21: Nutflanke
- 22: Rinne
- 24, 25: Tellerrandbereich
- 28, 29: Vorsprungseiten
- 28a: Fase
- 30: Nutgrund
- 31: Spalt
- 33,34: Tellerrandbereich
- 35: Mittellinie
- 36: Außenkante
- 37: mittlerer Bereich des Vorsprunges
- 38: Saugscheibenmitte
- 39: Nocken
- 40: Handgriff
- 71,73: Abstützfläche
- 75: Saugscheibenoberseite
- 76: Hohlraum
- 77: Anlagebereich
- 78: Fuß
- 79: Tellerrandabstützvorsprung
- 80: Spalt
- 82: Saugscheibenbereich
- 91: Saugscheibenrand
- 92, 93: Abstützvorsprung
- 94: Spalt
- 95, 96: Hinterschneidungen

## Patentansprüche

1. Saugheber (1) zur temporären Fixierung an einer im Wesentlichen glatten, luftundurchlässigen Befestigungsfläche mit einem auf die Befestigungsfläche aufzusetzenden Saugteller (2) mit deformierbarer Saugscheibe (3), der ausgebildet ist, um zwischen der Saugscheibe (3) und der Befestigungsfläche (4) einen teilvakuumbeaufschlagten Hohlraum auszubilden, wobei die Saugscheibe (3) zwischen dem Saugteller (2) und der Befestigungsfläche (4) angeordnet ist, wobei ferner der Saugteller (2) einen umlaufenden, den Hohlraum umgebenden Tellerrand (6) aufweist, an den sich bei Vakuumbeaufschlagung ein umlaufender Stützbereich einer dem Tellerrand (6) zugewandten Saugscheibenoberseite abstützt, wobei an dem Tellerrand (6) und/oder dem Saugscheibenrand Mittel vorgesehen sind, die bei Vakuumbeaufschlagung des Saughebers (1) und Scherkraftausübung auf den Saugteller (2) einer lateralen Verschiebung des Tellerrandes gegenüber dem Saugscheibenrand entgegenwirken, wobei die Mittel in Form von sich in Scherkraftrichtung hintergreifenden und bei Scherkraftausübung in radialer Richtung gegeneinander abstützenden Vorsprüngen (79, 11) von Tellerrand und Saugscheibenrand ausgebildet sind, und wobei der Abstützvorsprung (79) des Tellerrandes radial einwärts zu dem Abstützvorsprung (11) der Saugscheibe angeordnet ist, **dadurch gekennzeichnet, dass** der radial auswärts des Tellerrandvorsprunges (79) angeordnete Saugscheibenbereich als Kompressionsbereich ausgebildet ist, und dass der diesen druckbeaufschlagende Tellerrandbereich (19) ausgebildet ist, bei maximaler Vakuumbeaufschlagung des Saughebers die höchste Anpresskraft auf die Saugscheibe (3) in Richtung auf die Befestigungsfläche (4) auszuüben.

2. Saugheber nach Anspruch 1, **dadurch gekennzeichnet, dass** der Abstützvorsprung (79, 92) des Tellerrandes (6) von der Befestigungsfläche (4) einen minimalen Abstand d1 aufweist und dass die Saugscheibe (3) im Bereich ihres radialen Außenrandes eine Materialstärke d2 aufweist, die größer als der Abstand d1 ist.

3. Saugheber nach einem der Ansprüche 1 bis 2, **dadurch gekennzeichnet, dass** die Saugscheibe (3) und der Tellerrand (6) derart ausgebildet sind, dass bei zumindest annähernd maximaler Vakuumbeaufschlagung die Saugscheibe (3) sich auf Höhe des Stützbereichs derselben an dem Tellerrand (6) über einen Teil deren radialer Breite von der Befestigungsfläche (4) abhebt.

4. Saugheber nach einem der Ansprüche 1 bis 3, **dadurch gekennzeichnet, dass** der Saugscheibenvorsprung (11) bei teilvakuumbeaufschlagter und/oder bei nicht-teil-vakuumbeaufschlagter Saugscheibe (3) zumindest über einen Teil oder seine gesamte radiale Breite von dem Anlagebereich der Saugscheibe an der Befestigungsfläche unterstützt wird.

5. Saugheber nach einem der Ansprüche 1 bis 4, **dadurch gekennzeichnet, dass** der Tellerrand (6) eine sich zumindest über einen Teilumfang desselben erstreckende Nut (10) aufweist, und dass die Saugscheibenoberseite einen dem Tellerrand zugewandten Vorsprung (11) aufweist, der zumindest bei teilvakuumbeaufschlagter Saugscheibe in die Tellerrandnut eingreift und sich bei Scherkraftausübung auf den Saugteller (2) an einer Nutflanke (12) der Nut seitlich abstützt.

6. Saugheber nach einem der Ansprüche 1 bis 5, **dadurch gekennzeichnet, dass** der Abstützvorsprung (79, 92) des Tellerrandes (6) eine Hinterschneidung des Abstützvorspung (11) der Saugscheibe (3) hintergreift.

7. Saugscheibe nach einem der Ansprüche 1 bis 6, **dadurch gekennzeichnet, dass** der Außendurchmesser des Tellerrandes (6) im Wesentlichen dem Außendurchmesser der Saugscheibe (3) entspricht.

8. Saugheber nach einem der Ansprüche 1 bis 7, **dadurch gekennzeichnet, dass** der Tellerrand (6) und der gegenüberliegende Stützbereich der Saugscheibe derart strukturiert sind, dass sich bei Teilvakuumbeaufschlagung der Saugscheibe (3) sich über die radiale Erstreckung des Tellerrandes (6) Zonen mit unterschiedlicher Anpresskraft des Tellerrandes (6) gegenüber der Saugscheibe (3) ergeben.

9. Saugheber nach einem der Ansprüche 1 bis 8, **dadurch gekennzeichnet, dass** der Abstützvorsprung (15) des Tellerrandes radial einwärts zu dessen seitlicher Anlagefläche für den Saugscheibenvorsprung zur Saughebermitte hin von der Saugscheibe (3) zurückspringt.

10. Saugheber nach einem der Ansprüche 1 bis 9, **dadurch gekennzeichnet, dass** der Abstützvorsprung (11) der Saugscheibe (3) radial innen liegend und radial außen liegend unterschiedliche Flankengeometrien aufweist.

11. Saugheber nach einem der Ansprüche 1 bis 10, **dadurch gekennzeichnet, dass** bei nicht-teilvakuumbeaufschlagter Saugscheibe (3) die radial außen liegende Seite des in die Tellerrandnut (10) eingreifenden Saugscheibenvorsprungs (11) von der radial außen liegenden Nutflanke (21) radial beabstandet ist.

12. Saugheber nach einem der Ansprüche 1 bis 11, **dadurch gekennzeichnet, dass** die Bereiche der Saugscheibe (3), die in axialer Richtung des Saughebers (1) der radial inneren und radial äußeren Nutflanke (12, 21) gegenüberliegen, unterschiedliche Höhen aufweisen.

13. Saugheber nach einem der Ansprüche 1 bis 12, **dadurch gekennzeichnet, dass** die Saugscheibe (3) unabhängig von einer Einrichtung zur Erzeugung eines teilvakuumbeaufschlagten Hohlraum zwischen Saugscheibe (3) und Befestigungsfläche (4) eine Verdrehsicherung (39) gegenüber dem Saugteller aufweist.

14. Saugheber nach Anspruch 13, **dadurch gekennzeichnet, dass** die Verdrehsicherung (39) als zumindest ein oder mehrere radial und/oder axial vorstehende Bereiche des Abstützvorsprunges (11) der Saugscheibe (3) ausgebildet sind, der/die verdrehsichernd in eine oder mehrere Aufnahmen des Tellerrandes (6) eingreifen.

15. Saugheber nach einem der Ansprüche 1 bis 14, **dadurch gekennzeichnet, dass** der Abstützvorsprung (11) der Saugscheibe als Kreisbogenabschnitt ausgebildet ist und die Abstützvorsprünge von Saugscheibe (3) und/oderTellerrand (6) sich vollumfänglich oder nur über einen Teilumfang des Tellerrandes erstrecken, der bei Scherkraftausübung in Scherkraftrichtung liegt.

16. Saugheber nach Anspruch 5, **dadurch gekennzeichnet, dass** die radial innen liegende Nutflanke (12) weiter in Richtung auf die Saugscheibe (3) hin vorsteht als die radial außen liegende Nutflanke (21).

## Claims

1. Vacuum pick-up device (1) for temporary fixation on a substantially smooth, air-impermeable fixing surface, with a suction cup (2) including a deformable suction disc (3) and constructed for forming a hollow space to which a partial vacuum is applied between the suction disc (3) and the fixing surface (4), wherein the suction disc is disposed between the suction cup (2) and the fixing surface (4), wherein the suction cup (2) further presents a peripheral cup rim (6) which surrounds the hollow space and against which a peripheral supporting area of a suction cup upper face turned toward the cup rim (6) is supported at the time of applying the vacuum, wherein on said cup rim (6) and/or suction disc rim means are provided which act against a lateral displacement of the cup rim against the suction disc rim when a vacuum is applied to the vacuum pick-up device (1) and when a shearing force is applied to the suction cup (2), wherein said means are in the form of protrusions (79, 11) from the cup rim and the suction disc rim, which protrusions grip behind each other in the direction of the shearing force and are supported against each other in the radial direction when the shearing force is applied, and wherein the supporting protrusion (79) of the cup rim is arranged radially inwards to the supporting protrusion (11) of the suction disc, **characterized in that** the suction disc zone arranged radially outwardly of the cup rim protrusion (79) is constructed as a compression zone, and that the cup rim area (19) which exerts pressure on the said compression zone is constructed in such a manner that when a maximum vacuum is applied to the vacuum pick-up device, the highest pressure force is exerted on the suction disc (3) in the direction of the fixing surface (4).

2. Vacuum pick-up device according to claim 1, **characterized in that** the supporting protrusion (79, 92) of the cup rim (6) has a minimum distance d1 from the fixing surface (4) and that the suction disc (3) has a material thickness d2 in the region of its radially outer rim which is larger than the distance d1.

3. Vacuum pick-up device according to claims 1 to 2, **characterized in that** the suction disc (3) and the cup rim (6) are constructed in such a manner that when almost the maximum vacuum is applied, the suction disc (3) lifts off the fixing surface (4) over a part of its the radial width at the level of the supporting region of the same on the cup rim (6).

4. Vacuum pick-up device according to one of the claims 1 to 3, **characterized in that** when a partial vacuum is applied and/or when a partial vacuum is not applied to the suction disc (3), the suction disc protrusion (11) is supported by the contact area of the suction disc on the fixing surface, at least over a part of its radial width or over its total radial width.

5. Vacuum pick-up device according to one of the claims 1 to 4, **characterized in that** the cup rim (6) presents a groove (10) extending at least over a part of its circumference and that the suction disc upper face has a protrusion (11) turned towards the cup rim, said protrusion engaging in the cup rim groove when a partial vacuum is applied to the suction disc and being laterally supported against a groove flank (12) of the groove when a shearing force is exerted on the suction cup (2).

6. Vacuum pick-up device according to one of the claims 1 to 5, **characterized in that** the supporting protrusion (79, 92) of the cup rim (6) grips behind an undercut area of the supporting protrusion (11) of the suction disc (3).

7. Vacuum pick-up device according to one of the claims 1 to 6, **characterized in that** the outer diameter of the cup rim (6) substantially corresponds to the outer diameter of the suction disc (3).

8. Vacuum pick-up device according to one of the claims 1 to 7, **characterized in that** the cup rim (6) and the opposing supporting area of the suction disc have such an architecture that when a partial vacuum is applied to the suction disc (3), zones with a different contact pressing force of the cup rim (6) against the suction disc (3) are produced over the radial extension of the cup rim (6).

9. Vacuum pick-up device according to one of the claims 1 to 8, **characterized in that** the supporting protrusion (15) of the cup rim retreats from the suction disc (3) towards the center of the vacuum pick-up device radially inwardly to the lateral contact surface thereof for the suction disc protrusion.

10. Vacuum pick-up device according to one of the claims 1 to 9, **characterized in that** the supporting protrusion (11) of the suction disc (3) has different flank geometries on the radially inner side and on the radially outer side.

11. Vacuum pick-up device according to one of the claims 1 to 10, **characterized in that** when a partial vacuum is not applied to the suction disc (3), the radially outer side of the suction disc protrusion (11) engaging in the groove (10) of the cup rim is radially spaced from the radially outer groove flank (21).

12. Vacuum pick-up device according to one of the claims 1 to 11, **characterized in that** those areas of the suction disc (3) opposing the radially inner and radially outer groove flanks (21, 21) in the axial direction of the vacuum pick-up device (1) have different heights.

13. Vacuum pick-up device according to one of the claims 1 to 12, **characterized in that** the suction disc (3) has an anti-rotation feature (39) with respect to the suction cup independently of an installation for producing a hollow space to which a partial vacuum is applied, between the suction disc (3) and the fixing surface (4).

14. Vacuum pick-up device according to claim 13, **characterized in that** said anti-rotation feature (39) is constructed as one or more radially and/or axially protruding portions of the supporting protrusion (11) of the suction disc (3) which engages or engage in one or more seats of the cup rim (6).

15. Vacuum pick-up device according to one of the claims 1 to 14, **characterized in that** the supporting protrusion (11) of the suction disc is constructed as a section of an arc of a circle and that the supporting protrusions from the suction disc (3) and/or from the cup rim (6) extend over the full or only over a part of the circumference of the cup rim which lies in the direction of the shearing force when a shearing force is exerted.

16. Vacuum pick-up device according to claim 5, **characterized in that** the radially inner groove flank (12) protrudes farther in the direction of the suction disc (3) than the radially outer groove flank (21).

## Revendications

1. Dispositif de levage aspirant (1) pour la fixation temporaire sur une surface de fixation essentiellement lisse et étanche à l'air, avec une ventouse (2) destinée à être mise à la surface de fixation et comportant un disque d'aspiration déformable (3), ladite ventouse étant agencée pour former une cavité sous vide partiel, le disque d'aspiration (3) étant disposé entre la ventouse (2) et la surface de fixation (4), la ventouse (2) comportant en outre un bord périphérique (6) entourant la cavité, contre ledit bord périphérique s'appuie, lors de la mise sous vide, une partie de support périphérique d'une face supérieure du disque d'aspiration tournée vers le bord de la ventouse, le bord (6) de la ventouse et/ou le bord du disque d'aspiration étant munis des moyens qui, lors de la mise sous vide du dispositif de levage et lors de l'exercice d'un effort tranchant à la ventouse (2), s'opposent à un déplacement latéral du bord de la ventouse par rapport au bord du disque d'aspiration, lesdits moyens étant agencés sous forme de parties en saillie (79, 11) du bord de la ventouse et du bord du disque d'aspiration (3) qui, lors de l'exercice d'un effort tranchant dans la direction radiale, s'appuient l'une contre l'autre et engagent l'une dans l'autre dans la direction de l'effort tranchant, et la partie en saillie d'appui (79) du bord de la ventouse étant arrangée radialement vers l'intérieur de la partie en saillie d'appui (11) du disque d'aspiration, **caractérisé en ce que** la partie du disque d'aspiration arrangée radialement vers l'extérieur de la partie en saillie (79) du bord de la ventouse est agencée sous forme d'une partie de compression et que la partie (19)du bord de la ventouse exerçant une pression sur celle-ci est agencée de telle manière qu'elle exerce la force de pression plus haute sur le disque d'aspiration (3) dans la direction vers la surface de fixation (4)lorsque le dispositif de levage aspirant est mis sous le vide maximum.

2. Dispositif de levage aspirant selon la revendication 1, **caractérisé en ce que** la partie en saillie d'appui (79, 92) du bord (6) de la ventouse présente une distance minimale d1 de la surface de fixation (4) et que le disque d'aspiration (3) présente, dans la zone de son bord extérieur radial, une épaisseur de matière d2 qui est plus grande que la distance d1.

3. Dispositif de levage aspirant selon l'une quelconque des revendications 1 à 2, **caractérisé en ce que** le disque d'aspiration (3) et le bord (6) de la ventouse sont agencés de telle manière que, lors d'une mise sous vide environ maximale, le disque d'aspiration (3) se soulève, au niveau de la partie d'appui de celui-ci contre le bord (6) de la ventouse, de la surface de fixation (4) sur une partie de sa largeur radiale.

4. Dispositif de levage aspirant selon l'une quelconque des revendications 1 à 3, **caractérisé en ce que**, lors d'une mise sous vide partiel et/ou lors d'une mise sous vide pas partiel du disque d'aspiration (3), la partie en saillie (11) du disque d'aspiration est supportée sur la surface de fixation par la partie d'appui du disque d'aspiration, au moins sur une partie de sa largeur radiale ou sur sa largeur totale.

5. Dispositif de levage aspirant selon l'une quelconque des revendications 1 à 4, **caractérisé en ce que** le bord (6) de la ventouse présente une rainure (10) s'étendant sur au moins un périmètre partiel de celui-ci et que le haut du disque d'aspiration présente une partie en saillie (11) tournée vers le bord de la ventouse, partie en saillie qui engage dans la rainure du bord de la ventouse lors de la mise sous vide au moins partiel et qui s'appuie latéralement sur un flanc (12) de la rainure lors de l'exercice d'un effort tranchant sur la ventouse (2).

6. Dispositif de levage aspirant selon l'une quelconque des revendications 1 à 5, **caractérisé en ce que** la partie en saillie d'appui (79, 92) du bord (6) de la ventouse engage dans une contre-dépouille de la partie en saillie d'appui (11) du disque d'aspiration (3).

7. Dispositif de levage aspirant selon l'une quelconque des revendications 1 à 6, **caractérisé en ce que** le diamètre extérieur du bord (6) de la ventouse essentiellement corresponde au diamètre extérieur du disque d'aspiration (3).

8. Dispositif de levage aspirant selon l'une quelconque des revendications 1 à 7, **caractérisé en ce que** le bord (6) de la ventouse et la partie d'appui opposée du disque d'aspiration sont architecturés de telle manière que lors d'une mise sous vide partiel du disque d'aspiration on obtient des zones d'une force de pression différente du bord (6) de la ventouse par rapport au disque d'aspiration (3), sur l'extension radiale du bord (6) de la ventouse.

9. Dispositif de levage aspirant selon l'une quelconque des revendications 1 à 8, **caractérisé en ce que** la partie en saillie d'appui (15) du bord de la ventouse se retraite du disque d'aspiration (3) radialement vers l'intérieur de sa surface d'appui pour la partie en saillie du disque d'aspiration et vers le centre du dispositif de levage aspirant.

10. Dispositif de levage aspirant selon l'une quelconque des revendications 1 à 9, **caractérisé en ce que** la partie en saillie d'appui (11) du disque d'aspiration (3) présente des géométries de flancs différentes, radialement à l'intérieur et radialement à l'extérieur.

11. Dispositif de levage aspirant selon l'une des revendications 1 à 10, **caractérisé en ce qu'**en cas d'un disque d'aspiration (3) pas mise sous vide partiel, la face extérieure de la partie en saillie (11) du disque d'aspiration engageant dans la rainure (10) du bord de la ventouse est radialement écartée du flanc (21) de la rainure situé radialement à l'extérieur.

12. Dispositif de levage aspirant selon l'une quelconque des revendications 1 à 11, **caractérisé en ce que** les parties du disque d'aspiration (3) opposées au flanc radialement intérieur et au flanc radialement extérieur (12, 21) de la rainure dans la direction axiale du dispositif de levage aspirant (1) présentent des hauteurs différentes.

13. Dispositif de levage aspirant selon l'une quelconque des revendications 1 à 12, **caractérisé en ce que** le disque d'aspiration (3) présente un dispositif anti rotatif (39) par rapport à la ventouse, indépendamment d'une installation pour produire une cavité sous vide partiel entre le disque d'aspiration (3) et la surface de fixation (4).

14. Dispositif de levage aspirant selon la revendication 13, **caractérisé en ce que** le dispositif anti rotatif (39) est agencé sous forme d'une ou plusieurs épaulements radiaux et/ou axiaux de la partie en saillie d'appui (11) du disque d'aspiration qui engagent dans un ou plusieurs dispositifs de positionnement du bord (6) de la ventouse d'une manière anti rotative.

15. Dispositif de levage aspirant selon l'une quelconque des revendications 1 à 14, **caractérisé en ce que** la partie en saillie d'appui (11) du disque d'aspiration est agencée sous forme d'une section d'arc de cercle et que les parties en saillie d'appui du disque d'aspiration (3) et/ou du bord (6) de la ventouse s'étendent sur un périmètre du bord de la ventouse situé dans la direction de l'effort tranchant lors de l'exercice de l'effort tranchant, entièrement ou seulement en partie.

16. Dispositif de levage aspirant selon la revendication 5, **caractérisé en ce que** le flanc (12) de la rainure situé radialement à l'intérieur fait saillie dans la direction du disque d'aspiration(3) une distance plus grande que le flanc (21) de la rainure situé radialement à l'extérieur.
